# EUROPEAN PATENT SPECIFICATION

(11) **EP 2 164 819 B1**
(45) Date of publication and mention of the grant of the patent: **22.02.2012**
(21) Application number: 07795857.7
(22) Date of filing: 07.06.2007
(51) Int. Cl.: C04B 35/645, H01G 4/12

(54) **CERAMIC DIELECTRIC FORMULATION FOR BROAD BAND UHF ANTENNA**
DIELEKTRISCHE KERAMIKFORMULIERUNG FÜR BREITBAND-UHF-ANTENNE
FORMULATION DE DIÉLECTRIQUE EN CÉRAMIQUE POUR UNE ANTENNE UHF À LARGE BANDE

(43) Date of publication of application: 24.03.2010
(73) Proprietor: Vishay Intertechnology Inc., Columbus, NE 68602-0609 (US)
(72) Inventor: BERSHADSKY, Eli,, Columbus, Nebraska 68602-0609 (US); KRAVCHIK, Marina,, Columbus, Nebraska 68602-0609 (US); KATRARO, Reuven,, Columbus, Nebraska 68602-0609 (US); BEN-BASSAT, David,, Columbus, Nebraska 68602-0609 (US); ALON, Dani,, Columbus, Nebraska 68602-0609 (US)
(74) Representative: Johansson, Magnus
(86) International application number: PCT/US2007/013442
(87) International publication number: WO 2008/150262

(56) References cited:
- WO-A-94/29925
- WO-A-02/059059
- US-A- 5 312 790
- US-A- 5 635 434
- US-A- 5 693 429

## Description

### BACKGROUND OF THE INVENTION

The present invention relates to a dielectric ceramic material. More particularly, the present invention relates to a dielectric ceramic material with properties suitable for use in applications such as UHF antennas where a proper combination of dielectric constant and loss factor is desirable.

Several different dielectric ceramic systems are of potential use in antennas for RF and Microwave Frequencies. The advantage of using dielectrics in microwave devices is size reduction of the antenna, which is due to the phenomenon that the length of electromagnetic wave in a medium is inversely proportional to square root of its dielectric constant (λ ∼ **1**/√**K**). The dielectric constant of most commercial microwave materials varies from ∼10 to 30-40 to 80-100 with maximal ten-fold size reduction of antenna or resonator being achieved in the latter case. Part of such materials are described in patents: U.S. Patent No. 5,840,642 to Kim et al., U.S. Patent No. 5,569,632 to Jung et al., KR20040051732, CN1519216, RU2167842; PCT published patent application WO9721642 to Suvorov et al.; JP3192606, JP3183657; U.S. Patent No. 4,442,220 to Ouchi et al., all of which are herein incorporated by reference in their entirety.

However, even ten-fold size reduction is not sufficient for devices in the UHF domain (470 MHz to 870 MHz) where wavelength ranges from about 30 to 60 cm, which requires significant increase in dielectric constant of material. Materials with much higher dielectric constant (>1000) are based on ferroelectric systems, thus characterized by high dielectric losses and significant frequency dependence of properties at UHF. In order to form a viable UHF antenna a dielectric must have the correct combination of dielectric constant and loss factor to allow for the miniaturization of the antenna over the desired UHF frequency range 450MHz to 900MHz when combined with other components in the final antenna configuration. Dielectric ceramic with K in the range of 250 to 380, based on the Ag(Nb,Ta)O₃ system is described in PCT published patent application WO9803446 to Valant et al., however these materials are very expensive, require oxygen atmosphere at sintering and exhibit relatively high dielectric losses at UHF.

What is needed is an improved dielectric material for use in UHF antennas and/or other applications.

Therefore, it is a primary obj ect, feature, or advantage of the present invention to improve over the state of the art.

It is a further object, feature, or advantage of the present invention to provide an improved dielectric material suitable for use in UHF antennas.

A still further object, feature, or advantage of the present invention is to provide a ceramic dielectric material that does not require special atmosphere control during sintering.

Another object, feature, or advantage of the present invention is to provide a ceramic dielectric material that does not use expensive metals such as silver, niobium or tantalum.

Yet another object, feature, or advantage of the present invention is to provide a ceramic dielectric material that has a relatively high dielectric constant and a low dielectric loss.

One or more of these and/or other objects, features, or advantages of the present invention will become apparent from the specification and claims that follow.

### BRIEF SUMMARY OF THE INVENTION

A dielectric ceramic composition has a dielectric constant, K, of at least 200 and a dielectric loss, DF, of 0.0006 or less at 1 MHz. The dielectric ceramic composition may be formed by sintering by firing in air without a controlled atmosphere. The dielectric ceramic composition has a major component of 92.49 to 97.5 wt.% containing 60.15 to 68.2 wt.% strontium titanate, 11.02 to 23.59 wt.% calcium titanate and 7.11 to 21.32 wt. % barium titanate; and a minor component of 2.50 to 7.51 wt.% containing 1.18 to 3.55 wt% calcium zirconate, 0.50 to 1.54 wt.% bismuth trioxide, 0.2 to 0.59 wt.% zirconia, 0.02 to 0.07 wt.% manganese dioxide, 0.12 to 0.35 wt.% zinc oxide, 0.12 to 0.35 wt.% lead-free glass frit, 0.24 to 0.71 wt.% kaolin clay and 0.12 to 0.35 wt.% cerium oxide. The dielectric ceramic composition may be used in a broad band UHF antenna, in dielectric resonators, electrical filters, substrates, monolithic ceramic components, or otherwise.

A method of manufacturing includes providing a ceramic dielectric material consisting essentially of a major component of 92.49 to 97.5 wt.% containing 60.15 to 68.2 wt.% strontium titanate, 11.02 to 23.59 wt.% calcium titanate and 7.11 to 21.32 wt. % barium titanate, and a minor component of 2.50 to 7.51 wt.% containing 1.18 to 3.55 wt% calcium zirconate, 0.50 to 1.54 wt.% bismuth trioxide, 0.2 to 0.59 wt.% zirconia, 0.02 to 0.07 wt.% manganese dioxide, 0.12 to 0.35 wt.% zinc oxide, 0.12 to 0.35 wt.% lead-free glass frit, 0.24 to 0.71 wt.% kaolin clay and 0.12 to 0.35 wt.% cerium oxide. The method further includes firing the ceramic dielectric material.

### BRIEF DESCRIPTION OF THE DRAWINGS

FIG. 1 is a chart illustrating dielectric constants and dielectric losses for different examples of the dielectric ceramic material.
FIG. 2 is pictorial representation of one embodiment of a UHF antenna formed with a ceramic dielectric formulation.

### DETAILED DESCRIPTION OF THE PREFERRED EMBODIMENT

The invention described herein provides a ceramic formulation that when sintered into a ceramic substrate provides a material with high dielectric constant (> 200) and low losses; < 0.00060 @ 1MHz). When combined with tuner circuit elements this substrate is an effective broad band UHF antenna. Furthermore, unlike the Ag(Nb,Ta)O₃ system is described in PCT published patent application WO9803446 the invention herein does not require special atmosphere control during sintering nor does it use expensive metals such as silver, niobium or tantalum.

Following an extensive investigation of ceramic formulations in the SrTiO₃-BaTiO₃-CaTiO₃ system a range of formulations was identified with the correct combination of properties for UHF broadband antennas. The compositions investigated are described in Table 1 below:

**Table 1. Ceramic Compositions.**

| Component | A | B | C | D | E |
|---|---|---|---|---|---|
| | wt% | wt% | wt% | wt% | wt% |
| Strontium titanate | 56.83 | 66.80 | 63.43 | 60.15 | 70.12 |
| Barium titanate | 28.42 | 7.11 | 14.21 | 21.32 | 0 |
| Calcium titanate | 4.73 | 23.59 | 17.31 | 11.02 | 29.88 |
| Calcium zirconate | 4.73 | 1.18 | 2.37 | 3.55 | 0 |
| Bismuth trioxide | 2.05 | 0.50 | 1.03 | 1.54 | 0 |
| Zirconia | 0.79 | 0.20 | 0.40 | 0.59 | 0 |
| Manganese dioxide | 0.09 | 0.02 | 0.05 | 0.07 | 0 |
| Zinc oxide | 0.47 | 0.12 | 0.24 | 0.35 | 0 |
| Lead free Glass frit | 0.47 | 0.12 | 0.24 | 0.35 | 0 |
| Kaolin (Clay) | 0.95 | 0.24 | 0.48 | 0.71 | 0 |
| Cerium oxide | 0.47 | 0.12 | 0.24 | 0.35 | 0 |

These ceramic compositions were formulated into ceramic slips and cast into substrates by methods well known in the art. After removal of organics in a bakeout process the final sintering was performed in air at temperatures 1270°C and 1250°C respectively, although other temperatures may be used. The dielectric properties were measured at 1MHz and are shown in Table 2.

**Table 2. Dielectric properties at 1MHz**

| | Firing Temperature 1270°C | | Firing Temperature 1250°C | | TCC, ppm/°C | |
|---|---|---|---|---|---|---|
| Composition | K | DF | K, | DF | @-40 to 20°C | @20 to 85°C |
| A | 680 | 0.00059 | 680 | 0.00059 | ∼ -12000 | -5000 |
| B | 560.9 | 0.00036 | 560 | 0.00024 | -9300 | -4500 |
| C | 406.9 | 0.00042 | 407 | 0.00036 | -6600 | -3100 |
| D | 333.5 | 0.00046 | 328 | 0.00038 | -3900 | -2150 |
| E | 250 | 0.00032 | 250 | 0.00032 | -1200 | -1200 |

Example E is outside of the invention as claimed.

The dielectric constant (K) is very similar for the 2 different firing temperatures and there is a small variation in dielectric losses (DF). The temperature coefficient of capacitance (TCC) is similar for both firing temperatures. It is important to note that TCC for these compositions is very high compared to a Class 1 COG multilayer capacitor formulation (+/- 30ppm/°C in the temperature range -55°C to +125°C) or a narrow band microwave antennas. In the case of the multilayer capacitor or narrow band microwave antenna stable properties with temperature are required to prevent a drift out of specification with temperature fluctuations. However, since these ceramics are used in a UHF antenna over a broad frequency band, temperature stability is less critical so higher TCC can be tolerated.

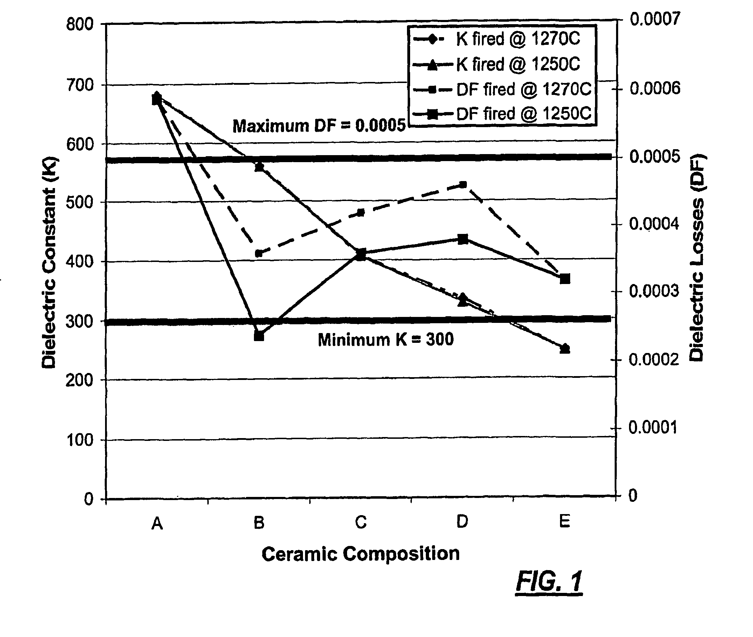

In order to form miniaturize the antenna whilst retaining low losses dielectric constant has to be maximized while retaining low losses. FIG. 1 provides a chart illustrating dielectric constants and DF for the examples provided. By plotting the dielectric constants and DF reported in Table 2 it can be seen that only for dielectric formulations B, C and D is the dielectric constant above 300 with DF below 0.0005.

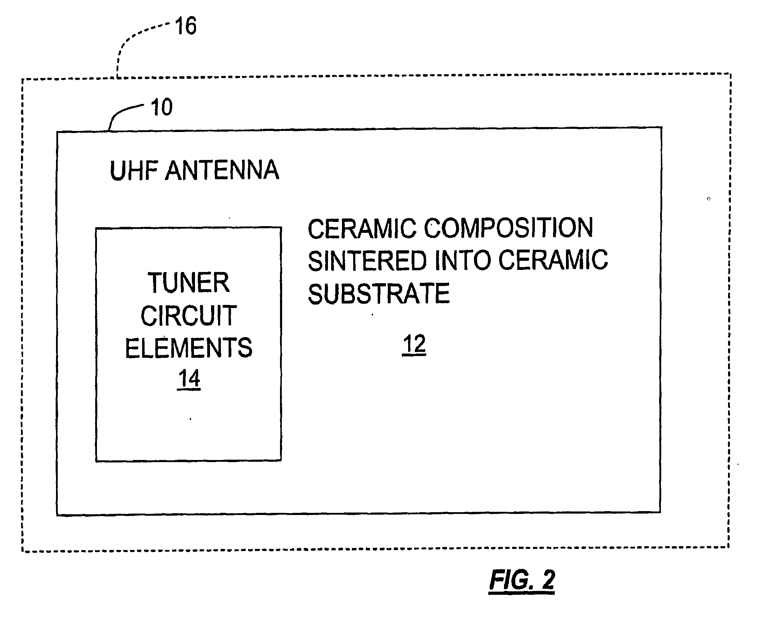

FIG. 2 is a pictorial representation of one embodiment of a UHF antenna formed with a ceramic dielectric formulation. The UHF antenna **10** includes a ceramic composition such as that previously described sintered into a ceramic substrate **12**. The UHF antenna **10** further includes tuner circuit elements **14**. The UHF antenna **10** is then incorporated into an electronic device **16**.

The dielectric ceramic material may be used for other purposes in addition to use in UHF antennas. It may be used in dielectric resonators, filters, substrates for microelectronic circuits, or built-in to any number of types of electronic devices.

## Claims

1. A dielectric ceramic composition having a dielectric constant, K, of at least 200 and a dielectric loss, DF, of 0.0006 or less at 1 MHz, the dielectric ceramic composition having a major component of 92.49 to 97.5 wt.% containing 60.15 to 68.2 wt.% strontium titanate, 11.02 to 23.59 wt.% calcium titanate and 7.11 to 21.32 wt. % barium titanate; and a minor component of 2.50 to 7.51 wt.% containing 1.18 to 3.55 wt% calcium zirconate, 0.50 to 1.54 wt.% bismuth trioxide, 0.2 to 0.59 wt.% zirconia, 0.02 to 0.07 wt.% manganese dioxide, 0.12 to 0.35 wt.% zinc oxide, 0.12 to 0.35 wt.% lead-free glass frit, 0.24 to 0.71 wt.% kaolin clay and 0.12 to 0.35 wt.% cerium oxide.

2. The dielectric ceramic composition of claim 1 wherein the dielectric composition is formed into a sintered body by firing.

3. A broad band UHF antenna comprised of the dielectric ceramic composition of claim 1.

4. An electronic device comprising the broad band UHF antenna of claim 3.

5. The dielectric ceramic composition of claim 1 having a dielectric constant, K, of at least 300 and a dielectric loss, DF, of 0.0005 or less at 1 MHz.

6. A monolithic ceramic component comprised of the dielectric ceramic composition of claim 1.

7. A method of manufacturing, comprising: providing a ceramic dielectric material consisting essentially of a major component of 92.49 to 97.5 wt.% containing 60.15 to 68.2 wt.% strontium titanate, 11.02 to 23.59 wt.% calcium titanate and 7.11 to 21.32 wt. % barium titanate, and a minor component of 2.50 to 7.51 wt.% containing 1.18 to 3.55 wt% calcium zirconate, 0.50 to 1.54 wt.% bismuth trioxide, 0.2 to 0.59 wt.% zirconia, 0.02 to 0.07 wt.% manganese dioxide, 0.12 to 0.35 wt.% zinc oxide, 0.12 to 0.35 wt.% lead-free glass frit, 0.24 to 0.71 wt.% kaolin clay and 0.12 to 0.35 wt.% cerium oxide; and firing the ceramic dielectric material.

8. The method of claim 7 wherein the step of firing the ceramic dielectric material is firing the ceramic dielectric material to sinter into a substrate.

9. The method of claim 8 wherein the substrate is associated with a UHF broadband antenna.

10. The method of claim 7 wherein the dielectric ceramic composition having a dielectric constant, K, of at least 200 and a dielectric loss, DF, of 0.0006 or less at 1 MHz.

11. The method of claim 7 wherein the dielectric ceramic composition having a dielectric constant, K, of at least 300 and a dielectric loss, DF, of 0.0005 or less at 1 MHz.

12. The method of claim 7 further comprising forming a monolithic ceramic component from the ceramic dielectric material.

13. The method of claim 7 wherein the step of firing the ceramic dielectric material includes firing the ceramic dielectric material to form a sintered body.

## Patentansprüche

1. Eine dielektrische keramische Zusammensetzung mit einer Dielektrizitätskonstante, K, von mindestens 200 und einem Dielektrizitätsverlust, DF, von 0,0006 oder weniger bei 1 MHz, wobei die dielektrische keramische Zusammensetzung 92,49 bis 97,5 Gew.-% einer Hauptkomponente, die 60,15 bis 68,2 Gew.-% Strontiumtitanat, 11,02 bis 23,59 Gew.-% Calciumtitanat und 7,11 bis 21,32 Gew.-% Bariumtitanat enthält; und 2,50 bis 7,51 Gew.-% einer Nebenkomponente, die 1,18 bis 3,55 Gew.-% Calciumzirconat, 0,50 bis 1,54 Gew.-% Wismuttrioxid, 0,2 bis 0,59 Gew.-% Zirkondioxid, 0,02 bis 0,07 Gew.-% Mangandioxid, 0,12 bis 0,35 Gew.-% Zinkoxid, 0,12 bis 0,35 Gew.-% bleifreie Glasfritte, 0,24 bis 0,71 Gew.-% Kaolin und 0,12 bis 0,35 Gew.-% Ceroxid enthält, aufweist.

2. Die dielektrische keramische Zusammensetzung nach Anspruch 1, wobei aus der dielektrischen Zusammensetzung durch Brennen ein Sinterkörper gebildet wird.

3. Eine Breitband-UHF-Antenne, umfassend die dielektrische keramische Zusammensetzung nach Anspruch 1.

4. Eine elektronische Vorrichtung, umfassend die Breitband-UHF-Antenne nach Anspruch 3.

5. Die dielektrische keramische Zusammensetzung nach Anspruch 1 mit einer Dielektrizitätskonstante, K, von mindestens 300 und einem Dielektrizitätsverlust, DF, von 0,0005 oder weniger bei 1 MHz.

6. Eine monolithische keramische Komponente, umfassend die dielektrische keramische Zusammensetzung nach Anspruch 1.

7. Ein Herstellungsverfahren, umfassend: Bereitstellen eines keramischen dielektrischen Materials, im Wesentlichen bestehend aus 92,49 bis 97,5 Gew.-% einer Hauptkomponente, die 60,15 bis 68,2 Gew.-% Strontiumtitanat, 11,02 bis 23,59 Gew.-% Calciumtitanat und 7,11 bis 21,32 Gew.-% Bariumtitanat enthält; und 2,50 bis 7,51 Gew.-% einer Nebenkomponente, die 1,18 bis 3,55 Gew.-% Calciumzirconat, 0,50 bis 1,54 Gew.-% Wismuttrioxid, 0,2 bis 0,59 Gew.-% Zirkondioxid, 0,02 bis 0,07 Gew.-% Mangandioxid, 0,12 bis 0,35 Gew.-% Zinkoxid, 0,12 bis 0,35 Gew.-% bleifreie Glasfritte, 0,24 bis 0,71 Gew.-% Kaolin und 0,12 bis 0,35 Gew.-% Ceroxid enthält; und Brennen des keramischen dielektrischen Materials.

8. Das Verfahren nach Anspruch 7, wobei der Schritt des Brennens des keramischen dielektrischen Materials Brennen des keramischen dielektrischen Materials, um es zu einem Substrat zu sintern, ist.

9. Das Verfahren nach Anspruch 8, wobei das Substrat mit einer UHF-Breitbandantenne in Zusammenhang steht.

10. Das Verfahren nach Anspruch 7, wobei die dielektrische keramische Zusammensetzung eine Dielektrizitätskonstante, K, von mindestens 200 und einen Dielektrizitätsverlust, DF, von 0,0006 oder weniger bei 1 MHz aufweist.

11. Das Verfahren nach Anspruch 7, wobei die dielektrische keramische Zusammensetzung eine Dielektrizitätskonstante, K, von mindestens 300 und einen Dielektrizitätsverlust, DF, von 0,0005 oder weniger bei 1 MHz aufweist.

12. Das Verfahren nach Anspruch 7, weiter umfassend Bilden einer monolithischen keramischen Komponente aus dem keramischen dielektrischen Material.

13. Das Verfahren nach Anspruch 7, wobei der Schritt des Brennens des keramischen dielektrischen Materials Brennen des keramischen dielektrischen Materials, um einen Sinterkörper zu bilden, umfasst.

## Revendications

1. Composition céramique diélectrique présentant une constante diélectrique, K, qui vaut au moins 200 et une perte diélectrique, DF, qui vaut 0,0006 ou moins à 1 MHz, la composition céramique diélectrique ayant un composant majoritaire de 92,49 à 97,5 % en poids contenant 60,15 à 68,2 % en poids de titanate de strontium, 11,02 à 23,59 % en poids de titanate de calcium et 7,11 à 21,32 % en poids de titanate de baryum ; et un composant minoritaire de 2,50 à 7,51 % en poids contenant 1,18 à 3,55 % en poids de zirconate de calcium, 0,50 à 1,54 % en poids de trioxyde de bismuth, 0,2 à 0,59 % en poids de zircone, 0,02 à 0,07 % en poids de dioxyde de manganèse, 0,12 à 0,35 % en poids d'oxyde de zinc, 0,12 à 0,35 % en poids de fritte de verre sans plomb, 0,24 à 0,71 % en poids d'argile kaolinique et 0,12 à 0,35 % en poids d'oxyde de cérium.

2. Composition céramique diélectrique de la revendication 1, dans laquelle la composition diélectrique se présente sous la forme d'un corps fritté par cuisson.

3. Antenne UHF large bande constituée par la composition céramique diélectrique de la revendication 1.

4. Dispositif électronique comprenant l'antenne UHF large bande de la revendication 3.

5. Composition céramique diélectrique de la revendication 1 présentant une constante diélectrique, K, qui vaut au moins 300 et une perte diélectrique, DF, qui vaut 0,0005 ou moins à 1 MHz.

6. Composant céramique monolithique constitué de la composition céramique diélectrique de la revendication 1.

7. Procédé de fabrication, comprenant le fait : de fournir un matériau diélectrique en céramique constitué essentiellement d'un composant majoritaire de 92,49 à 97,5 % en poids contenant 60,15 à 68,2 % en poids de titanate de strontium, 11,02 à 23,59 % en poids de titanate de calcium et 7,11 à 21,32 % en poids de titanate de baryum, et d'un composant minoritaire de 2,50 à 7,51 % en poids contenant 1,18 à 3,55 % en poids de zirconate de calcium, 0,50 à 1,54 % en poids de trioxyde de bismuth, 0,2 à 0,59 % en poids de zircone, 0,02 à 0,07 % en poids de dioxyde de manganèse, 0,12 à 0,35 % en poids d'oxyde de zinc, 0,12 à 0,35 % en poids % de fritte de verre sans plomb, 0,24 à 0,71 % en poids d'argile kaolinique et 6,12 à 0,35 % en poids d'oxyde de cérium ; et de cuire le matériau diélectrique en céramique.

8. Procédé de la revendication 7, dans lequel l'étape de cuisson du matériau diélectrique en céramique consiste à cuire le matériau diélectrique en céramique afin de le fritter sous la forme d'un substrat.

9. Procédé de la revendication 8, dans lequel le substrat est associé à une antenne UHF large bande.

10. Procédé de la revendication 7, dans lequel la composition céramique diélectrique présentant une constante diélectrique, K, qui vaut au moins 200 et une perte diélectrique, DF, qui vaut 0,0006 ou moins à 1 MHz.

11. Procédé de la revendication 7, dans lequel la composition céramique diélectrique présentant une constante diélectrique, K, qui vaut au moins 300 et une perte diélectrique, DF, qui vaut 0,0005 ou moins à 1 MHz.

12. Procédé de la revendication 7, comprenant en outre la formation d'un composant céramique monolithique à partir du matériau diélectrique en céramique.

13. Procédé de la revendication 7, dans lequel l'étape de cuisson du matériau diélectrique en céramique comporte la cuisson du matériau diélectrique en céramique afin de former un corps fritté.
